# EUROPEAN PATENT APPLICATION

(11) **EP 4 837 780 A1**
(43) Date of publication of application: **11.11.2026**
(21) Application number: 26174661.4
(22) Date of filing: 27.04.2026
(51) Int. Cl.: B60L 58/40, B60L 50/75, H02J 7/34

(54) **METHODS, APPARATUSES, CONTROLLERS, AND PRODUCTS FOR CONTROLLING POWER TRANSMISSION UNITS**

(30) Priority: 09.05.2025 CN 202510604460
(71) Applicant: Robert Bosch GmbH, 70442 Stuttgart (DE)
(72) Inventor: ZHANG, Guangtu, Jiangsu, 214028 (CN); CHEN, Wei, Jiangsu, 214028 (CN); ZHANG, Bin, Jiangsu, 214028 (CN); YAN, Zhao, Jiangsu, 214028 (CN); HU, Fanxi, Jiangsu, 214028 (CN); XU, Lina, Jiangsu, 214028 (CN); ZHONG, Yiling, Jiangsu, 214028 (CN); CHEN, Dongsheng, Jiangsu, 214028 (CN)

(57) **Abstract**

Embodiments of the present disclosure relate to methods (500), apparatuses, controllers, and program products for controlling power transmission units PTUs (200). The method comprises receiving (502) a request to charge the voltage of an input capacitor in the PTU connected in parallel with a stack contactor switch SCS (206) to a target voltage. The method (500) further comprises determining (504), based on the target voltage, a duty cycle (312) for at least two switches in a switch set (212, 214, 222, 224, 232, 234, 242, 244) in the PTU (200). The method (500) further comprises controlling (506) at least two switches based on the duty cycle (312) to charge the voltage of the input capacitor (208) to a target voltage. In this way, a high-voltage battery of a fuel cell system can be used to charge the SCS (206), which improves charging efficiency and reduces charging costs compared to charging the SCS (206) using a low-voltage battery.

## Description

### Technical Field

The embodiments of the present disclosure relate generally to the field of intelligent driving of vehicles, and in particular to methods, apparatuses, controllers, and program products for controlling power transmission units (PTUs).

### Background

For fuel cell systems, PTUs are typically used to transmit electrical energy from a fuel cell power system (e.g., a stack of a fuel cell system) to a power battery (e.g., a high-voltage (HV) battery). PTUs typically comprises components such as DC-DC (DC-DC) converters, control units, sensors, capacitors, resistors, stack contactor switches (SCSs), communication interfaces, and the like. The DC-DC converter typically comprises a plurality of switches (e.g., metal-oxide-semiconductor field-effect transistors, MOSFETs). MOSFETs control the current flow by gate voltage and are characterized by high input impedance, low power consumption, and high reliability.

### Summary of the Invention

In general, the various example embodiments of the present disclosure provide technical solutions for controlling a PTU.

In a first aspect, a method for controlling a PTU is provided. The method comprises receiving a request to charge the voltage of an input capacitor in the PTU connected in parallel with the SCS to a target voltage. The method further comprises determining, based on the target voltage, a duty cycle for at least two switches in a switch set in the PTU. The method further comprises controlling at least two switches based on the duty cycle to charge the voltage of the input capacitor to the target voltage.

In a second aspect, an apparatus for controlling a PTU is provided. The apparatus comprises a receiving module configured to receive a request to charge the voltage of an input capacitor in the PTU connected in parallel with the SCS to a target voltage. The apparatus further comprises a determination module configured to determine, based on the target voltage, a duty cycle for at least two switches in a switch set in the PTU. The apparatus further comprises a control module configured to control at least two switches based on the duty cycle to charge the voltage of the input capacitor to the target voltage.

In a third aspect, a controller is provided. The controller comprises a processor; and a memory coupled to the processor and having instructions stored thereon that, when executed by the processor, cause the controller to perform the method according to the first aspect.

In a fourth aspect, a vehicle is provided. The vehicle comprises the controller according to the third aspect.

In a fifth aspect, a computer-readable medium is provided. The computer-readable medium comprises instructions stored therein that, when executed by the processor, cause the processor to perform the method according to the first aspect.

In a sixth aspect, a program product is provided. The program product comprises a computer program that, when executed, implements the method according to the first aspect.

It will be understood that the Summary of the Invention is not intended to identify key or essential features of the embodiments of the present disclosure, nor is it intended to limit the scope of the present disclosure. Other features of the present disclosure will become readily apparent from the following description.

### Brief Description of the Drawings

The foregoing and other purposes, features, and advantages of this disclosure will become more apparent by a more detailed description of the exemplary embodiments of the present disclosure in conjunction with the accompanying drawings, in which several exemplary embodiments disclosed herein will be illustrated in an exemplary and non-limiting manner, wherein:
FIG. 1 illustrates a schematic diagram of an example fuel cell system that may implement various embodiments of the present disclosure;
FIG. 2 illustrates a schematic diagram of an example structure of a PTU according to some embodiments of the present disclosure;
FIG. 3 illustrates a schematic diagram of the control flow of a proportional-integral (PI) controller performing pre-charge according to some embodiments of the present disclosure;
FIG. 4 illustrates a schematic diagram of the control flow of a PI controller performing current control according to some embodiments of the present disclosure;
FIG. 5 illustrates a flowchart of a method for controlling a PTU according to some embodiments of the present disclosure;
FIG. 6 illustrates a flowchart of an apparatus for controlling a PTU according to some embodiments of the present disclosure; and
FIG. 7 illustrates a schematic block diagram of an example controller implementing some embodiments of the present disclosure.

Throughout the drawings, like or similar reference numerals represent like or similar elements.

### Detailed Description of the Embodiments

The embodiments of the present disclosure will be described in further detail below with reference to the accompanying drawings. While certain embodiments of the present disclosure are shown in the accompanying drawings, it should be understood that the present disclosure may be implemented in various forms and should not be construed as being limited to the embodiments set forth herein, rather these embodiments are provided for a more thorough and complete understanding of the present disclosure. It should be understood that the accompanying drawings and embodiments of the present disclosure are for exemplary purposes only and are not intended to limit the scope of protection of the present disclosure. The embodiments of the present disclosure described below with reference to the accompanying drawings are for exemplary purposes only.

As described above, the PTU is positioned between the fuel cell stack and the high-voltage battery (also known as the battery) to transmit electrical energy from the fuel cell power system to the high-voltage battery. The PTU typically comprises a stack contactor switch (SCS). The SCS can be configured to be closed or opened as required. When the SCS changes from open to closed, an electric arc (spark) may occur due to the large voltage difference across the SCS, which may affect safety. Therefore, pre-charge can be performed on the SCS such that the voltage difference across the SCS is relatively small, so that no electric arc is produced when it is closed.

Traditionally, pre-charging of the SCS is performed using a low-voltage battery (typically 12V or 24V). Because pre-charging the SCS typically requires charging the voltage at its terminals to a level close to that of a high-voltage battery, using a low-voltage battery for pre-charging is less efficient, takes longer, and results in greater energy loss. Improving the efficiency of pre-charging the SCS is challenging.

In view of this, to address at least one of the above shortcomings, embodiments of the present disclosure
provide a solution for controlling the PTU. This solution charges the SCS by adjusting the duty cycles of a plurality of switches in the PTU, which causes the switches to be iteratively opened and closed, thereby enabling the transmission of electrical energy from the high-voltage battery to the output capacitor of the PTU, and then from the output capacitor to the input capacitor of the PTU. In this way, the solution can achieve the purpose of pre-charging the SCS using a high-voltage battery. Thus, the charging efficiency is improved and charging costs are reduced compared to charging the SCS with a low-voltage battery.

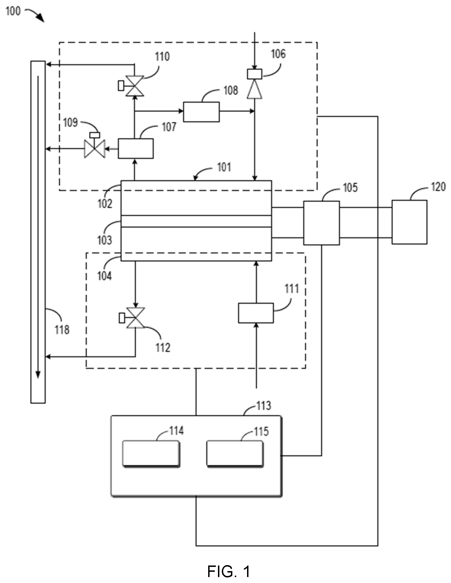

FIG. 1 illustrates a schematic diagram of an example fuel cell system 100 that may implement various embodiments of the present disclosure. The example fuel cell system 100 is merely illustrative and is not intended to imply any limitation on the scope or functionality of the embodiments of the present disclosure described herein.

As shown in FIG. 1, the example fuel cell system 100 may comprise a fuel cell stack 101. The fuel cell stack 101 may comprise an anode 102, a membrane electrode 103, and a cathode 104. In the fuel cell stack 101, hydrogen in the anode 102 and oxygen in the cathode 104 may undergo an electrochemical reaction on the membrane electrode 103 to generate electrical energy, which is then supplied to the load through the PTU 105. For example, the PTU may comprise a DC-DC converter and the fuel cell stack 101 may be connected to a high-voltage battery 120, and then the high-voltage battery 120 supplies power to the load. In the fuel cell stack 101, the anode 102 and the cathode 104 generate a potential difference during the electrochemical reaction, which is the output voltage of the fuel cell stack 101. In embodiments of the present disclosure, the fuel cell system 100 may comprise a plurality of subsystems, such as a hydrogen system (which may provide hydrogen), a cathode system (which may provide humid air), a thermal system (which may control the temperature of the fuel cell stack), and an electrical system (which may obtain current from the fuel cell stack).

In some example embodiments, the fuel cell system 100 may comprise a hydrogen injector 106, a water separator 107, a hydrogen circulation pump 108, a drain valve 109, an exhaust valve 110, and a tail exhaust valve 113. The hydrogen injector 106 may supply hydrogen from the hydrogen storage system to the anode 102 of the fuel cell stack 101, and the hydrogen injector 106 may control the pressure and flow rate of the hydrogen. The water separator 107 may separate the liquid water discharged from the anode 102, the hydrogen circulation pump 108 may circulate the unreacted hydrogen in the anode 102 from the outlet of the anode 102 to the inlet of the anode 102, the drain valve 109 may discharge the liquid water separated by the water separator 107, and the exhaust valve 110 may discharge impurity gas (such as nitrogen) when the proportion of impurity gas in the anode 102 becomes elevated. Both the liquid water discharged by the drain valve 109 and the gas discharged by the exhaust valve 110 may be discharged from the fuel cell system through the tail exhaust valve 113.

The water separator 107 is capable of separating the liquid water discharged from the anode 102. The hydrogen circulating pump 108 may facilitate the recirculation of unconsumed hydrogen gas within the anode 102 and direct it from the outlet of the anode back into its inlet. The drain valve 109 may perform the function of discharging the liquid water separated by the water separator 107. The exhaust valve 110 may discharge impurity gas when the concentration of impurity gas (such as nitrogen) in the anode 102 becomes elevated. Both the liquid water discharged by the drain valve 109 and the gas discharged by the exhaust valve 110 may be discharged from the fuel cell system 100 through the tail exhaust valve 113. The fuel cell system 100 may further comprise an air compressor 111 and a back pressure valve 112. The air compressor 111 may be used to pressurize air to provide air to the cathode 104 of the fuel cell stack 101. The back pressure valve 112 may be used to regulate the gas pressure within the cathode 104 and to discharge waste gas (primarily nitrogen) after reaction within the cathode 104. The gas discharged by the back pressure valve 112 may be discharged from the fuel cell system through the tail exhaust valve 113.

It will be understood that the fuel cell system 100 is merely an example of an embodiment of the present disclosure and does not limit the technical solutions provided by the present disclosure. The fuel cell system 100 may also comprise more or fewer components.

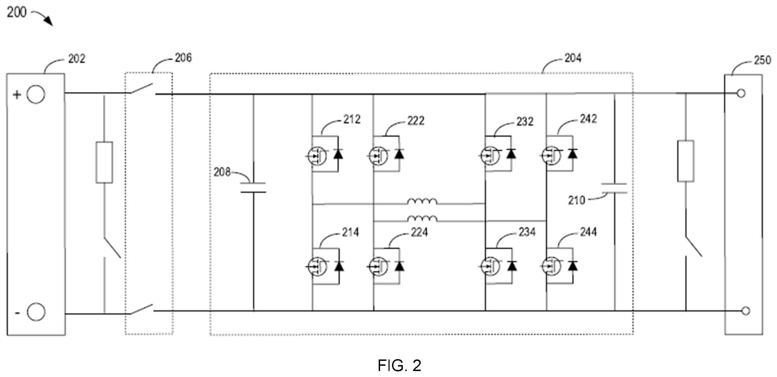

FIG. 2 illustrates a schematic diagram of an example structure of a PTU 200 according to some embodiments of the present disclosure. As shown in FIG. 2, in order to more clearly illustrate the functions of the PTU, FIG. 2 further shows components that are not part of the PTU 200 but are connected to the PTU 200, such as a fuel cell stack 202 and a high-voltage battery 250.

Notably, for the purpose of greater focus, some components within the PTU that are less relevant to the techniques of the present disclosure are also omitted in FIG. 2, such as insulation monitoring detection (IMD), electrochemical impedance spectroscopy (EIS), electromagnetic compatibility (EMC) components, and a circuit board (PCBA). FIG. 2 focuses only on components relevant to the present disclosure, e.g., the 2-phase interleaved buck/boost module 204 and the SCS 206.

As shown in FIG. 1, the 2-phase interleaved buck/boost module 204 may comprise eight MOSFETs (also referred to as switches). For example, MOSFET 212 and MOSFET 214, MOSFET 222 and MOSFET 224, MOSFET 232 and MOSFET 234, and MOSFET 242 and MOSFET 244. MOSFET 212 and MOSFET 214 are also referred to as a first set of MOSFETs. MOSFET 222 and MOSFET 224 are also referred to as a second set of MOSFETs. MOSFET 232 and MOSFET 234 are also referred to as a third set of MOSFETs. MOSFET 242 and MOSFET 244 are also referred to as a fourth set of MOSFETs.

The first set of MOSFETs and the third set of MOSFETs may be connected via an inductor to form the first phase in the 2-phase interleaved buck/boost module. The second set of MOSFETs and the fourth set of MOSFETs may be connected via an inductor to form the second phase in the 2-phase interleaved buck/boost module. Thus, the four MOSFETs (212, 214, 232, 234) in the first phase may be referred to as a first switch set and the four MOSFETs (222, 224, 242, 244) in the second phase may be referred to as a second switch set. It is to be noted that these designations are for convenience of description only and do not constitute a limitation.

The first set of MOSFETs and the second set of MOSFETs are connected in parallel with the input capacitor 208, and the third set of MOSFETs and the fourth set of MOSFETs are connected in parallel with the output capacitor 210. Each MOSFET may be turned on and off for a set duty cycle to connect and disconnect the required circuits and control the on and off times of the circuits to achieve the purpose of bucking or boosting. For example, the output voltage of the fuel cell stack 202 may be input to the PTU as the input voltage and the output voltage of the PTU may be input to a high-voltage battery. By way of different control methods (e.g., power module 5, PM5), the PTU may implement functions such as pre-charge, current control (including buck mode, buck-boost mode, and boost mode), and active discharge.

The purpose of the pre-charge function is to reduce the voltage difference across the SCS to avoid creating an electric arc when the SCS is closed. For example, the method of charging the SCS could be to raise the input-side voltage (e.g., electrical energy could be stored in the input capacitor 208). When the PTU receives a pre-charge request from a fuel cell control unit (FCCU), the PTU may utilize a PI controller. The calculation result of the PI controller may be, for example, to adjust the duty cycle of MOSFET 224 and MOSFET 242.

As an example, when MOSFET 224 and MOSFET 242 are turned on, a loop can be formed that connects the electrical energy of the high-voltage battery to the output capacitor 210. In this way, the voltage across the output capacitor 210 may be increased and the electrical energy may be stored in the output capacitor 210. When MOSFET 224 and MOSFET 242 are disconnected, a loop can be formed that connects the output capacitor 210 with the input capacitor 208. In this way, the stored electrical energy in the output capacitor 210 may be transferred to the input capacitor 208. This enables pre-charge of the SCS using a high-voltage battery. Notably, the size of the duty cycle of MOSFET 224 and MOSFET 242 described above may be determined based on the target voltage. In addition, the PTU may also determine which MOSFETs need to be used to perform the pre-charge task based the structure of the specific PTU (e.g., different from PTU 200), not necessarily MOSFET 224 and MOSFET 242 shown in FIG. 2.

If high-voltage pre-charge is not used, the SCS must be precharged with a low-voltage battery, which increases the associated hardware circuitry and therefore costs. Using the method of the present disclosure, no additional hardware circuitry is required, thus saving costs, and by charging the SCS using a high-voltage battery, charging efficiency is improved, charging time is reduced, and pre-charge tasks can be completed more quickly.

In some embodiments, the PTU may further perform current control functions. The purpose of current control is to switch to buck mode if the voltage of the high-voltage battery is greater than the output voltage of the PTU. For example, the duty cycles of MOSFETs 212 and 222 will be calculated by the current control controller, while the duty cycles of other MOSFETs are fixed. If the voltage of the high-voltage battery is close to the output voltage of the PTU, the current control will operate in either boost or buck/boost mode. The duty cycle of MOSFETs 234 and 244 will be calculated by the current control controller, while the duty cycles of other MOSFETs are fixed.

In some embodiments, the PTU may further perform active discharge functions. When the PTU receives a discharge request from the FCCU, for example, a request that the voltage on the output side of the PTU (e.g., a high-voltage battery) drop below 60V (or other threshold voltage) within 5 seconds, the conventional active discharge method involves closing a relay to connect the high-voltage battery to an active discharge circuit, thus dissipating electrical energy in the active discharge circuit. As a result, costs are increased due to the introduction of the active discharge circuit. The method provided in the present disclosure further enables the PTU 200 to actively discharge using MOSFETs 232 and 234 as well as 242 and 244. The electrical energy that needs to be released can be dissipated by the switching losses of these MOSFETs, thereby eliminating the need for an active discharge circuit and reducing costs.

In some embodiments, the PTU may set the duty cycle of MOSFETs 212 and 222 as well as 232 and 242 to 1, set the duty cycle of MOSFETs 214 and 224 to 0, and set the duty cycle of MOSFETs 234 and 244 to a smaller value (i.e., frequently turn the MOSFETs on and off with a duty cycle period (e.g., 40 microseconds)). In this way, the energy of the high-voltage battery can be dissipated in the switching losses of the MOSFET by turning off MOSFETs 232 and 234 at the same time and turning off MOSFETs 242 and 244 at the same time. Switching loss refers to the amount of energy lost by a MOSFET during the switching process (from on to off or from off to on), which is an inherent characteristic of MOSFETs. Through this design, the PTU's MOSFETs can be utilized in place of an active discharge circuit, thus saving on the cost of manufacturing the PTU.

In addition, the method of the present disclosure may further discharge the SCS using the MOSFETs of the PTU, and the principle is similar to that of the high-voltage battery described above. As an example, the PTU may set the duty cycle of MOSFETs 212 and 222 as well as 232 and 242 to 1, set the duty cycle of MOSFETs 214 and 224 to 0, and set the duty cycle of MOSFETs 234 and 244 to a smaller value to frequently turn the MOSFETs on and off. In this way, the energy of the output capacitor 210 can be dissipated in the switching losses of MOSFET 234 and MOSFET 244 by turning off MOSFET 232 and MOSFET 234 at the same time and turning off MOSFET 242 and MOSFET 244 at the same time. The energy of the input capacitor 208 can be dissipated in the switching losses of MOSFET 234 and MOSFET 244 by turning off MOSFET 212 and MOSFET 234 at the same time and turning off MOSFET 222 and MOSFET 244 at the same time. In this way, compared with conventional solutions, the solution of the present disclosure further provides the function of discharging the SCS, improving vehicle safety without increasing hardware costs.

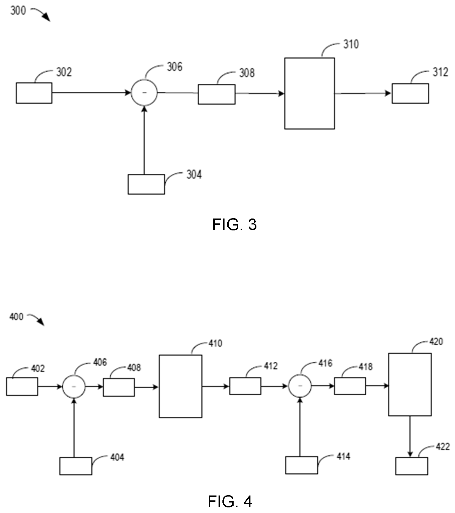

FIG. 3 illustrates a schematic diagram of the control flow 300 of a PI controller performing pre-charge according to some embodiments of the present disclosure. The PI controller may be a logical concept implemented using a control unit in the PTU, or implemented using software, etc. The PTU may receive a request from the FCCU that comprises the target charging voltage 302. The PTU may utilize sensors or otherwise obtain the current actual voltage 304 of the SCS. The PTU may utilize a comparator 306 to determine the error 308 between the target charging voltage 302 and the current actual voltage 304.

The PI controller 310 may calculate, based on the error 308, which MOSFETs to utilize for pre-charging, as well as the corresponding duty cycles of these MOSFETs. For example, the PI controller 310 determines the duty cycle 312 of MOSFET 224 and MOSFET 242 (for simplicity, this is used to uniformly represent the duty cycle of MOSFET 224 and/or the duty cycle of MOSFET 242). In this way, the PTU can pre-charge the SCS by adjusting the opening and closing of MOSFET 224 and MOSFET 242 with the duty cycle 312 to increase the input-side voltage.

FIG. 4 illustrates a schematic diagram of the control flow 400 of a PI controller performing current control according to some embodiments of the present disclosure. In FIG. 4, the control flow 400 has 2 control loops. The outer loop may represent a battery pack current PI controller 410, and the inner loop may represent a phase current PI controller 420. For example, the calculation result of the PI controller's control of the inner loop may be assigned, based on different operating modes (buck mode, buck-boost mode, boost mode) and products (buck-boost system PTU or boost system PTU), to the respective duty cycles of MOSFET 212, MOSFET 214, MOSFET 222, MOSFET 224, MOSFET 232, MOSFET 234, MOSFET 242, and MOSFET 244.

The PTU may receive a request comprising a target current 402 for the fuel cell stack and acquire the current actual current 404 of the fuel cell stack (e.g., via a sensor or otherwise). The PTU may utilize a comparator 406 to determine the error 408 between the target current 402 and the current actual current 404. The PI controller 410 may calculate the duty cycle and control the MOSFET based on the duty cycle to acquire the current actual phase current 414 (e.g., via a sensor or otherwise) and calculate the target phase current 412. The phase current may be understood as the average current over one cycle (e.g., the length of the duty cycle). The PTU may utilize a comparator 416 to determine the error 418 between the target phase current 412 and the actual phase current 414. The PI controller 420 may calculate a value 422 based on the error 418. The value 422 may correspond to a value to be used by a buck-boost system or a boost system.

In some embodiments, the name of the value 422 may be ratDTot. For a buck-buck boost-boost system, if ratDTot is less than 0.98, the PTU is in buck mode. The duty cycle of MOSFET 212 may then be set to ratDTot, and the duty cycle of MOSFET 234 may be set to 0. MOSFET 214 may be used for synchronous rectification in buck mode. If ratDTot is between 0.98 and 1.1, the PTU is in buck-boost mode. RatDTot will be assigned to MOSFET 212 and MOSFET 234. MOSFET 232 may be used for synchronous rectification in buck-boost mode. If RatDTot exceeds 1.1, the PTU is in boost mode. RatDTot may be assigned to MOSFET 212 and MOSFET 234. MOSFET 232 can be used for synchronous rectification in boost mode.

MOSFETs 232 and 242 may be used for synchronous rectification. It will be understood that the PI controllers 410 and 420 and comparators 406 and 416 are named only for convenience of description, and may in fact be the same components. Which MOSFETs and duty cycles are used specifically will be determined according to the specific PTU, and the above is merely a non-limiting illustrative example.

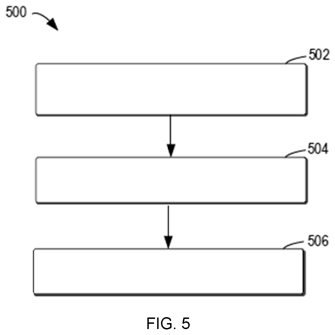

Referring to FIG. 5, a flowchart of an example method 500 for controlling a PTU according to some embodiments of the present disclosure is illustrated. The method 500 may be executed by a PTU, implemented in software, or implemented on a distributed system, cloud computing resources, or the like. At 502, a request is received to charge the voltage of an input capacitor in the PTU connected in parallel with the SCS to a target voltage. At 504, based on the target voltage, a duty cycle for at least two switches in a switch set in the PTU is determined. At 506, based on the duty cycle, at least two switches are controlled to charge the voltage of the input capacitor to the target voltage. By implementing the method 500, the objective of pre-charging the SCS with a high-voltage battery can be achieved. Thus, compared with charging the SCS with a low-voltage battery, it can not only improve charging efficiency, but also reduce charging costs.

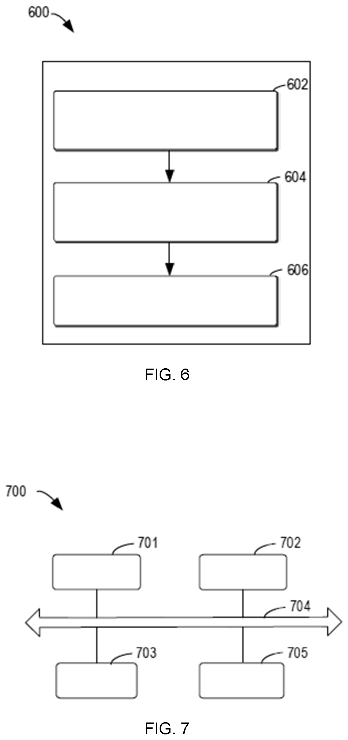

Referring to FIG. 6, a block diagram of an example apparatus 600 for controlling a PTU according to some embodiments of the present disclosure is illustrated. The apparatus 600 comprises a receiving module 602 configured to receive a request to charge the voltage of an input capacitor in the PTU connected in parallel with the SCS to a target voltage. The apparatus 600 further comprises a determination module 604 configured to determine, based on the target voltage, a duty cycle for at least two switches in a switch set in the PTU. The apparatus 600 further comprises a control module 606 configured to control at least two switches based on the duty cycle to charge the voltage of the input capacitor to the target voltage.

In some embodiments, the control module 606 may further be configured to control at least two switches based on the duty cycle to transfer electrical energy from the high-voltage battery of the fuel cell system to the output capacitor; and to connect a module configured to connect at least two switches based on the duty cycle to transfer electrical energy from the output capacitor to the input capacitor of the PTU.

In some embodiments, the output capacitor is connected in parallel with the high-voltage battery. The PTU comprises a first switch set and a second switch set. The first switch set has a different phase from the second switch set. At least two switches belong to the first switch set, or at least two switches belong to the second switch set.

In some embodiments, the apparatus 600 may further comprise an acquisition module configured to acquire a target current for the fuel cell stack of the fuel cell system from a fuel cell stack controller; a first determination module configured to determine, based on the target current, a first duty cycle of at least one switch in the first switch set of the PTU and a second duty cycle of at least one switch in the second switch set; and a first control module configured to control the PTU such that the current of the fuel cell stack reaches the target current based on the first duty cycle and the second duty cycle.

In some embodiments, the first control module may further comprise a disconnect and connect module configured to disconnect and connect at least one switch in the first switch set and at least one switch in the second switch set based on a first duty cycle and a second duty cycle to distribute a first current of the first switch set and a second current of the second switch set, wherein the sum of the first current and the second current is equal to the target current.

In some embodiments, the apparatus 600 may further comprise a first response module configured to control the PTU in boost mode in response to the current voltage of the fuel cell stack being less than the output voltage of the fuel cell stack and the difference between the current voltage and the output voltage being outside a predetermined range; a second response module configured to control the PTU in buck-boost mode in response to the difference between the current voltage and the output voltage being within a predetermined range; and a third response module configured to control the PTU in buck mode in response to the current voltage being greater than the output voltage and the difference between the current voltage and the output voltage being outside a predetermined range.

In some embodiments, the apparatus 600 may further comprise a first receiving module configured to receive a request to discharge the high-voltage battery of the fuel cell system; a second control module configured to control a plurality of switches in the first switch set and a plurality of switches in the second switch set to form a first circuit; and a second disconnect and connect module configured to iteratively disconnect and connect the first circuit at a predetermined frequency to discharge the high-voltage battery by dissipating the electrical energy of the high-voltage battery across a plurality of switches in the first circuit until the voltage of the high-voltage battery is reduced to a threshold voltage.

In some embodiments, the apparatus 600 may further comprise a third control module configured to control a plurality of switches in the first switch set and a plurality of switches in the second switch set to form a second circuit; and a third disconnect and connect module configured to iteratively disconnect and connect the second circuit at a predetermined frequency to discharge the SCS by dissipating the electrical energy of the SCS across a plurality of switches in the second circuit until the voltage of the input capacitor is reduced to a threshold voltage.

In some embodiments, the first circuit is connected to the output capacitor of the PTU and the second circuit is connected to the input capacitor of the PTU.

By implementing the example embodiment of FIG. 6, it is similarly possible to achieve the purpose of pre-charging the SCS using a high-voltage battery. Thus, compared with charging the SCS with a low-voltage battery, it can improve charging efficiency and also reduce charging costs.

Referring to FIG. 7, a block diagram of a controller 700 according to some embodiments of the present disclosure is illustrated. As shown in the figure, the controller 700 comprises a central processing unit (CPU) 701, which can execute various appropriate actions and processing based on computer program instructions stored in a read-only memory (ROM) 702 or computer program instructions loaded onto a random access memory (RAM) 703 from a storage unit. Various programs and data required to operate the controller 700 may also be stored in the RAM 703. The CPU 701, ROM 702, and RAM 703 are connected to each other by a bus 704, and the input/output (I/O) interface 705 is also connected to the bus 704. Non-limiting examples of the controller 700 may comprises a PTU, a control unit in the PTU, and/or an FCCU.

Each of the processes and processing described above, such as the method 500, may be performed by the processing unit 701. For example, in some embodiments, the method 500 may be implemented as a computer software program contained in a computer-readable medium, such as a storage unit. In some embodiments, the computer-readable medium is a non-transitory computer-readable medium. In some embodiments, the computer program computer program may be partially or entirely loaded and/or installed into the controller 700 via the ROM 702 and/or a communication unit. One or more steps of the above method 500 are implemented when the computer program is loaded into RAM 703 and executed by the CPU 701. Alternatively, in other embodiments, the CPU 701 may also be configured in any appropriate manner to implement the above-described processes/methods.

The content of the present disclosure may be a method, an apparatus, a system, and/or a program product. The program product may comprise a computer-readable storage medium loaded with computer-readable program instructions for performing various aspects of the content of the present disclosure.

The computer-readable storage medium may be a tangible device that can retain and store instructions for use by an instruction execution device. The computer-readable storage medium may be, for example, but is not limited to, an electrical storage device, a magnetic storage device, an optical storage device, an electromagnetic storage device, a semiconductor memory device, or any suitable combination. More specific examples of computer-readable storage media (non-exhaustive list) comprise: a portable computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, a mechanical encoding device (such as a punch card or raised structures with instructions recorded in grooves), and any suitable combinations. The computer-readable storage medium used herein should not be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to corresponding computing/processing devices from computer-readable storage medium, or downloaded from networks (such as the Internet, a local area network, a wide-area network, and/or a wireless network) to external computers or external storage devices. The networks may comprise copper transmission cables, optical transmission fibers, wireless transmissions, routers, firewalls, switches, gateway computers, and/or edge servers. The network adapter card or network interface in each computing/processing device receives the computer-readable program instructions from the network and forwards the computer-readable program instructions to a computer-readable storage medium for storage within the corresponding computing/processing device.

The computer-readable program instructions used to execute the operations of the present disclosure may be assembly instructions, instructions set architecture (ISA) instructions, machine instructions, machine-related instructions, microcode, firmware instructions, state-setting data, or source code or object code written in any combination of one or more programming languages, including object-oriented programming languages such as Smalltalk and C++, as well as conventional procedural programming languages such as "C" programming language and similar programming languages. Computer-readable program instructions may be executed entirely on the user's computer, executed in part on the user's computer, executed as a standalone software package, executed in part on the user's computer and in part on a remote computer, or executed entirely on a remote computer or server. In the latter case, the remote computer may connect to the user's computer via any type of network, including a local area network (LAN) or wide area network (WAN), or may connect to an external computer (e.g., via the Internet provided by an Internet service provider). In some embodiments, the state information of computer-readable program instructions can be used to personalize electronic circuits, including a programmable logic circuit (PLC), field-programmable gate array (FPGA), or programmable logic array (PLA), wherein computer-readable program instructions can be executed, thereby achieving the various aspects of the present disclosure.

Aspects of the present disclosure are described herein with reference to flow charts and/or block diagrams depicting the method, apparatus (system), and program product according to the embodiments of the present disclosure. It should be understood that each block of the flowcharts and/or block diagrams, as well as combinations of blocks in the flowchart illustrations and/or block diagrams, can be implemented by computer-readable program instructions.

These computer-readable program instructions may be provided to the processor of a general-purpose computer, special-purpose computer, or other programmable data processing device to generate a machine such that the instructions executed by the processor of the computer or other programmable data processing device create means for implementing the functions/actions specified in the flowchart and/or one or more block diagrams. These computer-readable program instructions may also be stored in a computer-readable storage medium that may direct the computer, programmable data processing device, and/or other device to operate in a particular manner such that the computer-readable storage medium in which the instructions are stored includes an article of manufacture that includes instructions to implement aspects of the functions/actions specified in the flowchart and/or one or more block diagrams.

Computer-readable program instructions may also be loaded onto a computer, other programmable data processing device, or other device such that a series of steps are performed on the computer, other programmable device, or other device, resulting in a computer-implemented process such that instructions executed on the computer, other programmable device, or other device implement the functions/actions specified in the flowchart and/or one or more block diagrams.

The flowchart and block diagrams illustrate the architecture, functionality, and operation of possible implementations of systems, methods, and program products according to various embodiments of the present disclosure. In this regard, each box in the flowchart or block diagrams may represent a module, segment, or code portion that includes one or more executable instructions for implementing one or more specified logical functions. In some alternative implementations, the functions indicated in the boxes may be implemented in a different order than that shown in the figures.

For example, two consecutively displayed boxes can actually be executed almost simultaneously, or sometimes in reverse order, depending on the functionality involved. It should also be noted that each of the boxes in the block diagrams and/or flowchart illustrations, as well as combinations of boxes in the block diagram and/or flowchart illustrations, may be implemented by a dedicated hardware system that performs the specified function or action or by a combination of dedicated hardware and computer instructions.

Furthermore, although the operations are shown in a particular order, it is not to be understood as requiring those operations to be performed in the particular order or sequence shown, or requiring all of the shown operations to be performed to achieve the desired result. In some cases, multitasking and parallel processing may be advantageous. Likewise, while the above discussion includes a number of specific implementation details, it should not be construed as limiting the scope of the present disclosure, but as describing features of particular embodiments. Certain features described in the context of different embodiments may also be implemented in combination in a single embodiment. Conversely, the various features described in the context of a single embodiment may also be implemented individually or in any suitable sub-combination in a plurality of embodiments.

Those of ordinary skill in the art may appreciate that, in conjunction with the examples described in the embodiments disclosed in the present specification, the units and algorithmic steps may be implemented by electronic hardware or a combination of computer software and electronic hardware. Whether these functions are implemented by hardware or software depends on the specific application and design constraints of the technical solution. Those skilled in the art may use different methods for each particular application to achieve the described functions, but such implementation should not be considered to be beyond the scope of the present application.

Those skilled in the art can clearly understand that, for convenience and simplicity of description, for the detailed working processes of the above-described systems, devices, and units, the corresponding processes in the foregoing method embodiments can be referenced and will not be repeated here.

In the several embodiments provided in the present application, it should be understood that the disclosed system, apparatus, and methods can be implemented in other ways. For example, the described apparatus embodiments are merely examples. For example, the division of units is simply a logical division of functions, which may be divided in other ways in actual implementation. For example, a plurality of units or components may be combined or integrated into another system, or certain features may be ignored or not performed. In addition, the mutual coupling or direct coupling or communication connections shown or discussed may be implemented through some interfaces. Indirect coupling or communication connections between devices or units may be achieved in electronic, mechanical, or other forms.

Units described as separate components may or may not be physically separate. Components shown as units may or may not be physical units. They may be located in one place or distributed across a plurality of network units. Some or all of the units may be selected to achieve the purpose of the technical solution of the embodiment according to actual needs.

In addition, the functional units in the embodiments of this application may be integrated in one processing unit, or each unit may be physically separate units, or two or more single units may be integrated in one unit.

When a function is implemented in the form of a software function unit and sold or utilized as a standalone product, it may be stored in a computer-readable storage medium. Based on this understanding, the technical solutions in the present application, in essence or in the parts or some technical solutions that contribute to the prior art, can be implemented in the form of software products. The computer software product is stored in a storage medium and includes several instructions for instructing a computer device (which may be a personal computer, server, network device, etc.) to execute all or part of the steps of the methods described in the embodiments of the present application. The aforementioned storage media comprise: USB drives, portable hard disks, read-only memory (ROM), random access memory (RAM), disks, optical disks, and any media that can store program code.

The foregoing is merely a specific embodiment of the present application and is not intended to limit the scope of protection of the present application. Variations or substitutions readily contemplated by any person skilled in the art within the technical scope disclosed in the present application fall within the scope of protection of the present application. Therefore, the scope of protection of the present application shall be subject to the scope of protection of the claims.

## Claims

1. . A method (500) for controlling a power transmission unit PTU, comprising:
receiving (502) a request to charge the voltage of an input capacitor (208) connected in parallel with a stack contactor switch SCS (206) in the PTU (200) to a target voltage;
determining (504), based on the target voltage, a duty cycle for at least two switches in a switch set (212, 214, 222, 224, 232, 234, 242, 244) in the PTU; and
controlling (506) the at least two switches based on the duty cycle (312) to charge the voltage of the input capacitor to the target voltage.

2. . The method (500) according to Claim 1, wherein controlling the at least two switches based on the duty cycle to charge the voltage of the input capacitor to the target voltage comprises:
controlling the at least two switches based on the duty cycle to transfer electrical energy from a high-voltage battery of a fuel cell system to an output capacitor (210) of the PTU; and
connecting the at least two switches based on the duty cycle to transfer the electrical energy from the output capacitor to the input capacitor (208).

3. . The method (500) according to Claim 2, wherein the output capacitor is connected in parallel with the high-voltage battery.

4. . The method (500) according to Claim 1, wherein:
The PTU comprises a first switch set and a second switch set;
the first switch set has a different phase from the second switch set; and
the at least two switches belong to the first switch set, or the at least two switches belong to the second switch set.

5. . The method (500) according to Claim 1, further comprising:
acquiring a target current for a fuel cell stack of the fuel cell system from a fuel cell stack controller;
determining, based on the target current, a first duty cycle of at least one switch in the first switch set and a second duty cycle of at least one switch in the second switch set of the PTU; and
controlling the PTU such that the current of the fuel cell stack reaches the target current based on the first duty cycle and the second duty cycle.

6. . The method (500) according to Claim 5, wherein controlling the PTU based on the first duty cycle and second duty cycle comprises:
disconnecting and connecting the at least one switch in the first switch set and the at least one switch in the second switch set based on the first duty cycle and the second duty cycle to distribute a first current of the first switch set and a second current of the second switch set, wherein the sum of the first current and the second current is equal to the target current.

7. . The method (500) according to Claim 5, wherein:
controlling the PTU in boost mode in response to the current voltage of the fuel cell stack being less than the output voltage of the fuel cell stack and the difference between the current voltage and the output voltage being outside a predetermined range;
controlling the PTU in buck-boost mode in response to the difference between the current voltage and the output voltage being within the predetermined range;
controlling the PTU in buck mode in response to the current voltage being greater than the output voltage and the difference between the current voltage and the output voltage being outside the predetermined range.

8. . The method (500) according to Claim 1, further comprising:
receiving a request to discharge a high-voltage battery of a fuel cell system;
controlling a plurality of switches in a first switch set and a plurality of switches in a second switch set to form a first circuit; and
iteratively disconnecting and connecting the first circuit at a predetermined frequency to discharge the high-voltage battery by dissipating the electrical energy of the high-voltage battery across the plurality of switches in the first circuit until the voltage of the high-voltage battery is reduced to a threshold voltage.

9. . The method (500) according to Claim 8, further comprising:
controlling a plurality of switches in the first switch set and a plurality of switches in the second switch set to form a second circuit; and
iteratively disconnecting and connecting the second circuit at a predetermined frequency to discharge the SCS by dissipating the electrical energy of the SCS across the plurality of switches in the second circuit until the voltage of the input capacitor is reduced to a threshold voltage.

10. . The method (500) according to Claim 9, wherein the first circuit is connected to an output capacitor of the PTU and the second circuit is connected to an input capacitor of the PTU.

11. . An apparatus (600) for controlling a power transmission unit PTU, comprising:
a receiving module (602) configured to receive a request to charge the voltage of an input capacitor in the PTU connected in parallel with a stack contactor switch SCS to a target voltage;
a determination module (604) configured to determine, based on the target voltage, a duty cycle for at least two switches in a switch set in the PTU ; and
a control module (606) configured to control the at least two switches based on the duty cycle to charge the voltage of the input capacitor to the target voltage.

12. . A controller (700), comprising:
a processor; and
a memory coupled to the processor and having instructions stored thereon, the instructions, when executed by the processor, causing the controller to perform the method according to any one of Claims 1 to 10.

13. . A program product comprising a computer program, wherein the computer program is executed to implement the method according to any one of Claims 1 to 10.
